(19) Europäisches Patentamt
European Patent Office
Office européen des brevets

(11) **EP 2 205 528 B1**

(12) **EUROPEAN PATENT SPECIFICATION**

(45) Date of publication and mention
of the grant of the patent:
**09.11.2011 Bulletin 2011/45**

(51) Int Cl.:
*C01G 23/047* (2006.01)        *C01G 25/02* (2006.01)
*C09C 1/36* (2006.01)          *C09C 3/06* (2006.01)

(21) Application number: **08833225.9**

(22) Date of filing: **18.09.2008**

(86) International application number:
**PCT/JP2008/067359**

(87) International publication number:
**WO 2009/041543 (02.04.2009 Gazette 2009/14)**

(54) **CORE-SHELL STRUCTURED METAL OXIDE PARTICLES AND METHOD FOR PRODUCING THE SAME**

METALLOXIDTEILCHEN MIT KERN-SCHALE-STRUKTUR UND HERSTELLUNGSVERFAHREN DAFÜR

PARTICULES D'OXYDE MÉTALLIQUE À STRUCTURE NOYAU-ENVELOPPE, PROCÉDÉ DE PRODUCTION DE CES DERNIÈRES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.09.2007 JP 2007248831**

(43) Date of publication of application:
**14.07.2010 Bulletin 2010/28**

(73) Proprietor: **FUJIFILM Corporation Tokyo 106-8620 (JP)**

(72) Inventor: **TADAKUMA, Yoshio Ashigarakami-gun Kanagawa 258-8577 (JP)**

(74) Representative: **HOFFMANN EITLE Patent- und Rechtsanwälte Arabellastraße 4 81925 München (DE)**

(56) References cited:
**EP-A- 1 947 155        JP-A- 2000 204 301 US-B1- 6 284 050**

• **EL-TONI A M ET AL: "Control of silica shell thickness and microporosity of titania-silica core-shell type nanoparticles to depress the photocatalytic activity of titania" JOURNAL OF COLLOID AND INTERFACE SCIENCE, ACADEMIC PRESS, NEW YORK, NY, US, vol. 300, no. 1, 1 August 2006 (2006-08-01), pages 123-130, XP024909364 ISSN: 0021-9797 [retrieved on 2006-08-01]**

## Description

Technical Field

The present invention relates to core-shell structured metal oxide particles with a high refractive index and low photocatalytic activity and also relates to a method for producing the core-shell structured metal oxide particles.

Background Art

Recently, as refractive indices of plastic lenses have become higher, organic-inorganic hybrid materials have become more actively studied. It is needless to say that in order to obtain an organic-inorganic hybrid material with high refractive index, increasing the refractive index of an organic material as a matrix is essential, and it is also necessary to use an inorganic material with high refractive index together with the organic material. Generally as such an inorganic material, a metal oxide has been used in terms of high transparency and high refractive index thereof.

However, metal oxides have more or less photocatalytic activity depending on the electron level, crystallinity, particle size, and so forth. For example, a titanium oxide is known for its high photocatalytic activity. When a titanium oxide is used with other metal oxides so as to obtain composite metal oxide particles and the composite metal oxide particles are dispersed in a matrix composed of an organic material, organic matters surrounding the particles become decomposed or degenerated due to positive holes generated in the particles by exposure to light, which leads to such serious problems as yellowing, increasing haze, weakening and degradation of the organic-inorganic material.

There are some types of crystal structure in titanium oxide. Among them, rutile type crystals are known as structures having the highest refractive index. As particles having high refractive index and low photocatalytic activity, particles are disclosed (see Non-Patent Literature 1) in which rutile type titanium oxide is used as core particles and surfaces of the core particles were coated with a metal oxide having low photocatalytic activity as shells.

Furthermore, as a method of coating surfaces of titanium oxide particles with other metal oxide having low photocatalytic activity, for example a method is proposed in Patent Literature 1, in which surfaces of titanium oxide particles are coated with an amorphous zirconium oxide by adding an aqueous solution of zirconium oxychloride to titanium oxide particles having the average particle diameter of 1 nm to 20 nm and by heating at 100°C. However with the use of the proposed production method, it is difficult to coat surfaces of titanium oxide particles uniformly and completely, resulting in uncoated surfaces of titanium oxide. If the amount of zirconium oxide added is increased to prevent generation of uncoated particles, the ratio of zirconium oxide, which has a low refractive index, to the titanium oxide becomes large and the refractive index of the entire particles is reduced, which leads to loss of the effect of using titanium oxide for increasing a refractive index.

Further Patent Literature 2 discloses a method of coating completely surface-treated titanium oxide particles that had been subjected to a surface treatment, with a metal oxide, by mixing the titanium oxide particles with the organometal compound. The object of this proposed method is to cover, with the organometal compound, portions without metal oxide existing on surfaces of titanium oxide particles. However the method lacks the key force for the organometal compound to selectively cover uncoated surface portions. Therefore, there is a possibility that not only metal-oxide-uncoated portions but also metal-oxide-coated portions are covered by the organometal compound. Furthermore, since the refractive indices of organometal compounds are generally lower than those of metal oxides, use of organometal compounds for reducing photocatalytic activity leads to reduction in refractive index.

Therefore, by the use of any of the methods described in the specifications of the related art, it is difficult to completely coat surfaces of composite metal oxide particles with a metal oxide, and photocatalytic activity depending on a material of the composite metal oxide remains on the uncoated portions. When such composite metal oxide particles coated with a metal oxide are dispersed in an organic matrix and resulting organic-inorganic material is exposed to light, coloring and various degradation processes due to the photocatalytic activity are inconveniently caused in the organic-inorganic material. At present prompt solutions to such problems are desired.

[Patent Literature 1] Japanese Patent Application Laid-Open (JP-A) No.2004-18311
[Patent Literature 2] JP-A No.2007-84374

[Non-Patent Literature 1] M. Kiyono, "Sanka Chitan- Busseito Oyogijutsu (Titanium oxide - physical properties and applied technology)" Gihhodo shuppan, Tokyo (June, 1991), pp. 29-33.

El-Toni et al. discloses core-shell structured metal oxide panicles comprising TiO2 as core particles and silica as a shell compound (JOURNAL OF COLLOID AND INTERFACE SCIENCE, vol.30, p.123-130).

Document JP2000204301 discloses core-shell structured metal oxide particles comprising $TiO_2$ and $SnO_2$ as core particles and a complex oxide of silica and an oxide of Ziconium and/or aluminum as a shell compound.

Document US6284050 discloses a ultraviolet assisted chemical vapour deposition method to apply polymer films to semiconductor wafers, which can be silicon oxide for example. The deposition system allows ultraviolet light to uniformly and controllably illuminate the surface of the semiconductor wafer before, during and after the deposition. The UV exposure occurring at the time of deposition promotes cross-linking of the polymer at the interface between the polymeric film and the substrate, promoting adhesion of the polymer to the substrate. The intensity of the UV light is between 100 and 600 mW/cm$^2$.

Disclosure of Invention

An object of the present invention is to provide core-shell structured metal oxide particles which have extremely low photocatalytic activity, to such an extent that it causes substantially no problem, and a high refractive index, and to provide a method for producing the core-shell structured metal oxide particles.

In order to solve the above mentioned problems, the inventors have earnestly investigated a method for providing composite metal oxide particles having photocatalytic activity that is sufficiently controlled to a low level and having a high refractive index, and found that core-shell structured metal oxide particles without having pinholes in shells can be obtained by exposing metal oxide core particles to light when forming shells on surfaces of the metal oxide core particles having photocatalytic activity, using a metal oxide having low photocatalytic activity. When shells are formed on surfaces of core particles, it is very difficult to coat the core particles with shells having a uniform thickness because of differences in shape of the particles and in plane indices of the particle surfaces and because of unevenness of synthetically reacted sites, resulting in generation of some exposed portions on the core particles which are not coated with shells. Since the exposed portions are very active photocatalytic sites, there is a possibility that the exposed portions increase photocatalytic activity although the shells have been formed for the purpose of suppressing photocatalytic activity In order to completely cover the exposed portions on the core particle surfaces with shells, a shell material must be added in large quantity. Since the refractive index of a shell material is generally lower than that of a core material, the refractive index of the core-shell structured particles become lower when the shell material is added in large quantity Therefore when the object is to obtain core-shell structured particles having high refractive index, this method is disadvantageous because it uses a large amount of shell material.

It is also found that according to the present invention, it is possible to significantly increase catalytic activity of the uncoated portions generated in the course of the shell formation, to uniformly and completely coat core particle surfaces with shells, to maintain a high refractive index while controlling photocatalytic activity to a sufficiently low level, by exposing the core particles to light having an intensity of 0.1 m W/cm$^2$ or more at the time of shell formation.

The present invention is based on the above-mentioned findings by the inventors and the means for solving the above-mentioned problems is as follows:

A method for producing core-shell structured metal oxide particles including at least forming shells composed of a metal oxide on surfaces of core particles so as to cover the core particles while exposing the core particles to light having an intensity of 0.1 mW/cm$^2$ or more,
wherein the core particles are metal oxide particles having photocatalytic activity.

Preferred embodiments of the above method for producing core-shell structured metal oxide particles are subject of the dependent claims. Furthermore, the present invention relates to core-shell structured metal oxide particles including at least core particles, and shells composed of a metal oxide and provided on surfaces of the core particles, with the following features as defined in the appended Claim 6.

According to the present invention, problems of the prior art can be solved, and it is possible to provide core-shell structured metal oxide particles having a high refractive index and low photocatalytic activity and a method for producing the core-shell structured metal oxide particles.

Best Mode for Carrying Out the Invention

(Core-shell structured metal oxide particles and method for producing core-shell structured metal oxide particles)

A method for producing core-shell structured metal oxide particles according to the present invention includes at least a step of forming shells, preferably further includes a step of forming cores, and other step(s) as required.

Core-shell structured metal oxide particles according to the present invention are produced by the method for producing core-shell structured metal oxide particles according to the present invention.

The core-shell structured metal oxide particles of the present invention will be also described in detail below, through a description of the method for producing core-shell structured metal oxide particles of the present invention.

<Step of forming core particles>

The core forming step is a step of forming core particles composed of a metal oxide having photocatalytic activity Specifically it is in the step in which a core metal oxide precursor is subjected to heat treatment in the presence of an acid, and a carboxylic compound may be added as required, to prepare a dispersion of core metal oxide particles.

The core particles are metal oxide particles having photocatalytic activity, and are preferably composed of a composite metal oxide containing titanium and tin.

The amount of tin contained in the core particles is preferably 1 atomic % to 50 atomic %, and more preferably 5 atomic % to 25 atomic % relative to the amount of titanium in the core particles. When the amount of tin in the core particles is less than 1 atomic % relative to the amount of titanium in the core particles, some core particles fail to form a crystal structure having high refractive index. When the amount of tin is more than 50 atomic %, particles composed solely of tin oxide are sometimes generated in addition to composite oxide particles composed of titanium and tin.

Preferably, the core particles are composite oxide particles containing rutile type titanium and tin and the shell is composed of ziroconium oxide, in terms that the resulting core-shell structured metal oxide particles can have a high refractive index while maintaining low photocatalytic activity.

When the core particles contain titanium oxide, the titanium oxide is preferably high in crystallinity.

Here, as a common method, X-ray diffraction method is used to confirm crystallinity of the titanium oxide particles by determining whether or not a peak of the titanium oxide particles is consistent with the peak of a corresponding single crystal by using, for example, RINT 1500 form Rigaku Corporation (X-ray source: copper $K_\alpha$ ray, wavelength: 1.5418 Å).

- Core metal oxide precursor -

The core metal oxide precursor preferably contains, for example, any one of organometal compounds, metal salts, and metal hydroxides.

The core metal oxide precursor may be solid or liquid, and preferably is a material which can be dissolved in water and treated as an aqueous solution.

Examples of the organometal compounds include metal alkoxide compounds and metal acetylacetonate compounds.

Examples of the metal alkoxide compounds include tetraalkoxytitaniums and alkoxyzirconiums.

Examples of the tetraalkoxytitaniums include tetramethoxytitanium, tetraethoxytitanium, tetrapropoxytitanium, tetraisopropoxytitanium, tetrabutoxytitanium, tetraisobutoxytitanium, tetrakis(2-methylpropoxy)titanium, tetrakispentoxy titanium, tetrakis(2-ethylbutoxy) titanium, tetrakis(octoxy) titanium, and tetrakis(2-ethylhexoxy) titanium. When the carbon atoms of alkoxyl group contained in tetraalkoxytitanium is too many, hydrolysis of tetraalkoxytitanium sometimes becomes insufficient. When the carbon atoms of alkoxyl group is too few, it sometimes becomes difficult to control the reaction because of high reactivity of the tetraalkoxytitanium. Thus among the examples of the tetraalkoxytitaniums, tetrapropoxytitanium and tetraisopropoxytitanium are particularly preferred.

Examples of the alkoxyzirconiums include methoxyzirconium, ethoxyzirconium, propoxyzirconium, butoxyzirconium, isobutoxyzirconium, and kis(2-methylpropoxy)zirconium. Among these, butoxyzirconium is particularly preferred.

As metal alkoxide compounds using metals other than titanium and zirconium, preferred are metal alkoxide compounds containing as a metal hafnium, aluminum, silicon, barium, tin, magnesium, calcium, iron, bismuth, gallium, germanium, indium, molybdenum, niobium, lead, antimony, strontium, tungsten, and yttria. The alkoxide of these metals can be produced by reacting a metal alkoxide such as a potassium alkoxide and a sodium alkoxide with a desired metal, as required.

Metal components of the metal salts are metal components of the corresponding metal oxides.

Examples of the metal salts include chlorides, bromides, iodides, nitrates, sulfates, and organic acid salt of desired metals. Examples of the organic acid salts include acetate, propionate, naphthenate, octoate, stearate and oleate.

For the metal hydroxides, for example, noncrystalline titanium hydroxide produced by neutralizing an aqueous solution of titanium tetrachloride with an alkaline solution, zirconium hydroxide, and a composite hydroxide of titanium and zirconium may be used.

- Acid -

Examples of acids include nitric acid, perchloric acid, hydrochloric acid, sulfuric acid, hydrobromic acid, hydriodic acid, $HPF_6$, $HClO_3$ and $HIO_4$.

The amount of the acid in the core particle dispersion is not particularly limited, can be appropriately selected depending on the purpose, and is preferably 0.1 mol to 1 mol, and more preferably 0.2 mol to 0.9 mol per 1 mol of metal.

- Carboxylic compound -

As the carboxylic compound, at least one selected from carboxylic acids, salts of carboxylic acids, and carboxylic anhydrides are used.

-- Carboxylic acid --

The carboxylic acid is not particularly limited, and can be appropriately selected depending on the purpose. Examples thereof include saturated aliphatic carboxylic acids such as formic acid, acetic acid, propionic acid, butyric acid, isobutyric acid, valeric acid, isovaleric acid, pivalic acid, caproic acid, caprylic acid, capric acid, malonic acid, succinic acid, glutaric acid, adipic acid, pimelic acid, and suberic acid; unsaturated aliphatic carboxylic acids such as acrylic acid, propiolic acid, methacrylic acid, crotonic acid, isocrotonic acid, maleic acid, and fumaric acid; hydroxy carboxylic acids such as lactic acid, tartaric acid, malic acid, and citric acid. These may be used alone or in combination of two or more.

The amount of the carboxylic acid in the core particles differs depending on the kind and the size of produced core particles, cannot be accurately defined, but is preferably 0.15 mol to 3 mol per 1 mol of metal.

-- Salt of carboxylic acid --

Salts of the carboxylic acid substantially exhibit the same effect as corresponding carboxylic acid, when they are dissociated.

Examples of the anionic part in the salt of carboxylic acid include those described in Carboxylic acid.

Examples of the cationic part in the salt of carboxylic acid include Li, Na, K, $NH_4$, $NH_3CH_2CH_2OH$, $NH_2(CH_2CH_2OH)_2$, and $NH(CH_2CH_2OH)_3$.

The amount of the salt of carboxylic acid in the core particles differs depending on the type and the size of produced core particles, cannot be accurately defined, but is preferably 0.15 mol to 3 mol per 1 mol of metal.

-- Carboxylic anhydride --

In an aqueous solution, the carboxylic anhydride, in which 2 molecules of carboxylic acid are condensed by losing one molecule of water, substantially exhibits the same effect as corresponding carboxylic acids.

The carboxylic anhydride is not particularly limited and can be appropriately selected depending on the purpose. Examples of the carboxylic anhydrides include acetic anhydrides, propionic anhydrides, succinic anhydrides, maleic anhydrides and phthalic anhydrides. These may be used alone or in combination of two or more.

The amount of the carboxylic anhydride in the core particles differs depending on the type and the size of produced core particles, cannot be accurately defined, but is preferably 0.075 mol to 1.5 mol per 1 mol of metal.

- Dispersing solvent -

As a dispersing solvent, water is used, and solvents other than water can be added as required. The solvents other than water are preferably compatible with water. Examples thereof include alcohols, ketones, aldehydes, ethers, and esters.

Examples of alcohols include methanol, ethanol, propanol, isopropanol, and butanol.

Examples of ketones include acetone and methyl ethyl ketone.

Examples of ethers include dioxane and diethyl ether.

- Heat treatment -

The heat treatment is preferably performed using a water bath or the like at 40°C to 95°C for 5 min to 240 min.

Specifically, a solution of an organometal compound and an alcohol are mixed at room temperature and stirred for 10 min. Subsequently an acid is added to the mixture, the resultant mixture is stirred for 30 min, supplied with water, and subjected to a heat treatment to prepare a dispersion of metal oxide particles. A carboxylic compound may be added to the core metal oxide precursor before or after the heat treatment. When the core particles are composed of a plurality of metals, organometal compounds of all the constituent metals of the core particles are mixed fully and mixed with an alcohol to stir for 10 min. Subsequently, an acid is added, the resultant mixture is stirred for 30 min, then water is added, and the resultant mixture is subjected to a heat treatment to prepare the dispersion of core metal oxide particles.

The size of the core particles obtained is preferably 0.5 nm to 5 nm. When the size of the core particles is more than 5 nm, catalytic activity of titanium oxide, as core metal oxide particles, is sometimes reduced, which results in degradation of efficiency of forming shells.

The particle size of the core particles can be measured, for example, as follows: the obtained dispersion is dropped onto a carbon-deposited copper mesh (micro-grid), dried, and observed using a transmission electron microscope, and then the TEM image is printed on a photo negative. The photographic images of 300 particles are obtained with varying viewpoints. These images of photo negatives are scanned using the KS300 system (from Carl Zeiss). A diameter of a circle equivalent to the diameter of each of particles can be determined by image processing.

<Shell forming step>

The step of forming shell is a step of forming shells of a metal oxide on surfaces of the core particles while being exposed to light of the intensity of 0.1 mW/cm$^2$ or more.

The wavelength of light to which the core particles are exposed is preferably 200 nm to 400 nm, and more preferably 250 nm to 380 nm.

The intensity of light to which the core particles are exposed is 0.1 mW/cm$^2$ or more, and more preferably 0.5 mW/cm$^2$ to 5 mW/cm$^2$. The intensity of light is measured at the liquid level of a reaction liquid put in a reaction vessel using a UV meter (UV-SD35, manufactured by ORC MANUFACTURING CO., LTD.).

The exposed time to light is not particularly limited, can be appropriately selected depending on the purpose, and is preferably 30 min to 5 hr.

Specifically, dispersion of core particles is mixed with an aqueous solution containing a shell metal oxide precursor at room temperature, and the mixture is subjected to heat treatment at 80°C for 2 hr while being exposed to light of the wavelength of 365 nm at an intensity of 1 mW/cm$^2$ from above the reaction vessel to form shells composed of a metal oxide on surfaces of the core particles.

In the step of forming shells, core particles obtained from the step of forming core particles are mixed with a shell metal oxide precursor, and the resultant mixture is subjected to heat treatment while being exposed to light to form a shell metal oxide.

After the dispersion of the core particles has been prepared, a shell metal oxide precursor may be directly mixed with the dispersion or may be dissolved in water or an organic solvent and then mixed, as a solution in water or an organic solvent, with the dispersion of the core particles. Subsequently, the mixture of the dispersion of the core particles and the shell metal oxide precursor is subjected to heat treatment while being exposed to light, thereby a shell metal oxide grows around the cores of the core particles.

As the shell metal oxide precursor, for example, any one of an organometal compound, a metal salt, and a metal hydroxide is used. The shell metal oxide precursor may be solid or liquid, and preferably is a material which can be dissolved in water and treated as an aqueous solution.

The metal constituting the shell metal oxide precursor is preferably any one of zirconium, hafnium, silicon, aluminum, and a combination thereof. Among these, zirconium is particularly preferred.

- Metal salt -

A metal component of the metal salt is the metal component of the corresponding metal oxide.

Examples of the metal salts include chlorides, bromides, iodides, nitrates, sulfates, and organic acid salts of desired metals. Examples of the organic acid salts include acetate, propionate, naphthenate, octoate, stearate and oleate.

- Metal hydroxide -

For the metal hydroxide, for example, zirconium hydroxide, and a composite hydroxide of titanium and zirconium may be used.

- Organometal compound -

Examples of the organometal compounds include metal alkoxy compounds and metal acetylacetonate compounds.

Examples of the metal alkoxy compounds include alkoxyzirconiums.

Examples of the alkoxyzirconiums include methoxyzirconium, ethoxyzirconium, propoxyzirconium, butoxyzirconium, isobutoxyzirconium, and kis(2-methylpropoxy)zirconium. Among these, butoxyzirconium is particularly preferred.

As the metal alkoxide compound containing metals other than titanium and zirconium, preferred are metal alkoxide compounds containing as a metal hafnium, aluminum, silicon, barium, tin, magnesium, calcium, iron, bismuth, gallium, germanium, indium, molybdenum, niobium, lead, antimony, strontium, tungsten, and yttria. The alkoxide of these metals can be produced by reacting a metal alkoxide such as a potassium alkoxide and a sodium alkoxide with a desired metal, as required.

<Heat treatment>

The heat treatment is preferably performed using a water bath at 40°C to 95°C for 5 min to 240 min.

<Other steps>

The washing method is not particularly limited and those known methods may be used as long as excessive ions can be removed. Examples thereof include ultrafiltration membrane method, filtration separation method, centrifugal separation-filtration method, and ion-exchange resin method.

The core-shell structured metal oxide particles produced by a method of the present invention for producing core-shell structured metal oxide particles, preferably have an average particle diameter of 1 nm to 20 nm, and more preferably 3 nm to 10 nm. When the core-shell structured metal oxide particles have an average particle diameter of more than 20 nm, Rayleigh scattering is so large to cause haze, and thus application of the core shell structured metal oxide particles may be often limited.

Here, the average particle diameter of the core-shell structured metal oxide particles may be found by measuring a 4 % by mass aqueous solution of core-shell structured metal oxide particles directly on a particle diameter distribution analyzer, MICROTRAC from NIKKISO Co., Ltd. Alternatively, the dispersion was dropped onto a carbon-deposited copper mesh (microgrid) and dried, and then observed by using a transmission electron microscope (TEM) to obtain a particle diameter. Specifically, images taken with a transmission electron microscope are either exposed to photo negatives or taken into a recording medium as digital images, and then the images are printed at a magnification large enough to observe particle diameters. The particle diameters can be measured from these prints. Because the TEM image is a two-dimensional image, it is difficult to obtain precise particle diameters, particularly in the case of non-spherical particles. However, the particle diameter can be determined by measuring a diameter of a circle equivalent to a projected area of a particle (i.e., equivalent circular diameter), which was photographed as a two-dimensional image, and calculating the average diameter of 300 particles in the images.

<Applications>

To the core-shell structured metal oxide particles of the present invention a binder component (resin component) can be added to prepare a composition for film deposition (coating composition), and it can be coated on a base material to form a particle dispersed film. Alternatively the core-shell structured metal oxide particles can similarly be contained in a binder component (resin component) so as to prepare a resin composition for molding. Moreover, core-shell structured metal oxide particles can also be prepared as a powder of particles by removing a solvent by concentration and drying, or centrifugation, and then by heating and dying.

The binder component is not particularly limited and can be appropriately selected depending on the purpose. Examples thereof include various kinds of synthetic resins such as thermoplastic or thermosetting resins (including thermosetting, ultraviolet curable, electron beam curable and moisture-curable resins, and combinations thereof), for example, silicone alkoxide binders, acrylic resins, polyester resins, and fluorine resins; and organic binders such as natural resins. Examples of the synthetic resins include alkyd resins, amino resins, vinyl resins, acrylic resins, epoxy resins, polyamide resins, polyurethane resins, thermosetting unsaturated polyester resins, phenol resins, chlorinated polyolefin resins, silicone resins, acrylic silicone resins, fluorine resins, xylene resins, petroleum resins, ketone resins, rosin-modified maleic resins, liquid polybutadienes and coumarone resins. Examples of the natural resins include shellacs, rosins (pine resins), ester gums, hardened rosins, decolored shellacs, and white shellacs. These may be used alone or in combination of two or more.

When the core-shell structured metal oxide particles are dispersed in a resin composition, the core-shell structured oxide particles are formulated with a dispersant, oil component, surfactant, pigment, preservative, alcohol, water, thickener or humectant, and can be used in various forms such as a dilute solution, tablet, lotion, cream, paste or stick, as required. The dispersant is not particularly limited and can be appropriately selected depending on the purpose. Examples thereof include a compound having a phosphoric acid group, a polymer having a phosphoric acid group, a silane coupling agent and a titanium coupling agent.

The core-shell structured metal oxide particles of the present invention can be preferably used for optical filters, coatings, fibers, cosmetics, lenses or the like, because it has low photocatalytic activity, excellent stability in dispersion, and high transparency in the visible regions and a certain wavelength range.

Examples

Examples of the present invention will be described below, however, the present invention is not limited in scope to these Examples at all.

(Example 1)

To 200 mL of water, 15 mL of 35 % by mass of hydrochloric acid was added and stirred at room temperature (26°C). To this solution, 2.15 g of tin (IV) chloride pentahydrate was added and fully stirred. Then, a mixed solution of 14 mL of titanium tetraisopropoxide and 50 mL of methanol was added therein and stirred for 20 minutes. A reaction vessel charged with the resultant mixture was put in a water bath at 80°C and heated for 10 minute, and then 10 mL of acetic acid as a carboxylic compound was added for completion of synthesis, thereby producing a dispersion of titanium-tin composite oxide particles as core particles.

The core particles thus obtained were analyzed by an X-ray diffractometer (RINT 2000, manufactured by Rigaku Corporation), and it was found that titanium oxide of the core particles was a rutile type titanium oxide.

The titanium-tin composite oxide particles thus obtained were observed with a transmission electron microscope (TEM; JEM-1200EX II, manufactured by JEOL Ltd.), and it was found that they have an average particle diameter of 4 nm.

Next, the dispersion of titanium-tin composite oxide particles (core particles) was mixed at room temperature (26°C) with a solution in which 8 g of zirconium (IV) oxychloride octahydrate had been dissolved in 50 mL of water, and the resulting mixture was subjected to heat treatment at 80°C for 2 hr while being exposed to light of 365 nm in wavelength and of 1 mW/cm$^2$ in intensity from above the reaction vessel from an ultraviolet source lamp (MODEL UVLMS-38, manufactured by UVP, LLC.), thereby forming shells composed of zirconium oxide on surfaces of the core particles (step of forming shells). According to the above processes, core-shell structured metal oxide particles were prepared. The intensity of light was measured at a position of the liquid level of the reaction liquid put in the reaction vessel using a UV meter (UV-SD35, manufactured by ORC MANUFACTURING CO., LTD.)

As far as the observation using a transmission electron microscope (TEM; JEM-1200EX II, manufactured by JEOL Ltd.) was concerned, there was almost no difference in average particle diameter between the core-shell structured metal oxide particles thus obtained and the core particles.

(Example 2)

Titanium oxide particles coated with zirconium oxide were prepared in the same manner as in Example 1, except that tin (IV) chloride pentahydrate was not added in the step of forming core particles.

(Example 3)

Titanium-tin composite oxide particles coated with zirconium oxide were prepared in the same manner as in Example 1, except that the amount of tin (IV) chloride pentahydrate added in the step of forming core particles was changed to 16.6 g.

(Comparative Example 1)

Titanium-tin composite oxide particles coated with zirconium oxide were prepared in the same manner as in Example 1, except that the core particles were not exposed to light in the shell forming step. However, the core particles received light with an intensity as high as that of room lighting because the particles were not prepared in a dark room. The intensity of light received by the core particles in the shell forming step was measured in the same manner as in Example 1, and it was found that the intensity of light having a wavelength range of 200 nm to 400 nm was 0.01 mW/cm$^2$.

(Comparative Example 2)

Titanium-tin composite oxide particles were prepared in the same manner as in Example 1, except that the shell forming step was not carried out (shells were not formed).

<Photocatalytic activity>

Photocatalytic activity of each of the particles of Examples 1 to 3 and Comparative Examples 1 and 2 was measured. Into a 5-mL glass cell with a lid 3.5-mL of each particle dispersion was put, and a 10-μL aqueous solution of 0.4 % by mass of methylene blue was added to each of the dispersions, and shaken so as to be well mixed with the particle dispersion. Subsequently, a change in concentration of methylene blue was measured with time while applying light of 365 nm in wavelength from side of the glass cell. For a UV source, MODEL UVLMS-38 manufactured by UVP, LLC., was used and the energy density of the light applied was 1 mW/cm². After exposed to UV light for a certain period of time, the glass cell containing each of the particle dispersions and methylene blue was set in a spectrophotometer (U-3310, manufactured by Hitachi, Ltd.), and a reduction rate of absorption peak of methylene blue at a wavelength of 665 nm was determined by light transmittance. Then, the decay time was calculated. The term "decay time" means a length of time period during which the value of the absorption peak of methylene blue at a wavelength of 665 nm is reduced to half of the initial value of the absorption peak while continuously exposing the glass cell to the UV light. The results are shown in Table 1.

<Measurement of refractive index of particles>

In order to determine the refractive index of each of the particles of Examples 1 to 3 and Comparative Examples 1 and 2, Maxwell-Garnett equation was used. In Maxwell-Garnett equation, the refractive index of each of the aqueous solutions was calculated from the refractive indices of the solvent and the solute, and the volume ratio between the solute and the solvent. The refractive index of the solvent for each dispersion was determined by using as a sample a solvent in which particles that had been obtained through ultrafiltration of the synthesized particle dispersion were removed, and by measuring the refractive index using an Abbe's refractive-index meter (DR-M4, manufactured by ATAGO CO., LTD.) at a wavelength of 589 nm. Similarly to the above, the refractive index of each of the particle dispersions of Examples 1 to 3 and Comparative Examples 1 and 2 was determined, the volume ratio between the solution and the solvent was calculated from the specific gravity of the aqueous solution, and the refractive index of each of the particles of Examples 1 to 3 and Comparative Examples 1 and 2 was calculated using the following Maxwell-Garnett equation. The results are shown in Table 1.

[Maxell-Garnett equation]

$$(n_c{}^2 - n_o{}^2) / (n_c{}^2 + 2n_o{}^2) = q\ (n_i{}^2 - n_o{}^2) / (n_i{}^2 + 2n_o{}^2)$$

wherein, $n_c$ is the refractive index of the particles, $n_o$ is the refractive index of the solution, $n_i$ is the refractive index of the solvent.

Table 1.

|  | Amount of tin relative to titanium in core particles | Intensity of light applied | Decay time | Refractive index |
|---|---|---|---|---|
| Ex. 1 | 12.5 atomic % | 1 mW/cm² | 60 hr | 2.46 |
| Ex. 2 | 0 atomic % | 1 mW/cm² | 51 hr | 2.13 |
| Ex. 3 | 100 atomic % | 1 mW/cm² | 58 hr | 2.21 |
| Comp.Ex. 1 | 12.5 atomic % | 0.01 mW/cm² | 37 hr | 2.47 |
| Comp.Ex. 2 | 12.5 atomic % | Unapplied | 5 hr | 2.61 |

Industrial Applicability

Since core-shell structured metal oxide particles produced by a method for producing core-shell structured metal oxide particles of the present invention have low photocatalytic activity and high transparency in the visible regions, they can be widely used for optical filters, coatings, fibers, cosmetics, lenses, and the like. Specifically, they can be widely used for hard coat films having high refractive indices for high-refractive plastic lenses provided with coating films, additives for preventing plastics from degrading, additives for cosmetics, camera lenses, windowpanes for automobiles, plasma displays, electro luminescent displays, liquid crystal displays, high-refractive films for reading and writing in high density recording optical media, and the like.

**Claims**

1. A method for producing core-shell structured metal oxide particles comprising

   forming shells composed of a metal oxide on surfaces of core particles so as to cover the core particles while exposing the core particles to light having an intensity of 0.1 mW/cm$^2$ or more,
   wherein the core particles are metal oxide particles having photocatalytic activity.

2. The method for producing core-shell structured metal oxide particles according to claim 1, wherein the wavelength of light applied is 200 nm to 400 nm.

3. The method for producing core-shell structured metal oxide particles according to claim 1 or 2, wherein the core particles are composite metal oxide particles containing titanium and tin.

4. The method for producing core-shell structured metal oxide particles 3 according to claim 3, wherein the amount of tin contained in the core particles is 1 atomic % to 50 atomic % relative to the amount of titanium in the core particles.

5. The method for producing core-shell structured metal oxide particles according to any one of claims 1 to 4, wherein the core particles are composite 23 metal oxide particles containing rutile type titanium and tin and the shell is a zirconium oxide.

6. Core-shell structured metal oxide particles comprising:

   core particles, and
   shells which are composed of a metal oxide and provided on surfaces of the core particles,
   wherein the core particles are metal oxide particles having photocatalytic activity, wherein the refractive index of the core-shell structured metal oxide particles is no less than 2.13, and
   wherein the metal oxide particles are obtainable by the method according to any one of claims 1 to 5.

**Patentansprüche**

1. Verfahren zur Herstellung von Metalloxidteilchen mit Kern-Hülle-Struktur, umfassend:

   Bilden von aus einem Metalloxid aufgebauten Hüllen auf den Oberflächen von Kernteilchen, um die Kernteilchen zu bedecken, während die Kernteilchen Licht mit einer Intensität von 0,1 mW/cm$^2$ oder mehr ausgesetzt werden, worin die Kernteilchen Metalloxidteilchen mit photokatalytischer Aktivität sind.

2. Verfahren zur Herstellung von Metalloxidteilchen mit Kern-Hülle-Struktur gemäß Anspruch 1, worin die Wellenlänge des angewendeten Lichts 200 nm bis 400 nm ist.

3. Verfahren zur Herstellung von Metalloxidteilchen mit Kern-Hülle-Struktur gemäß Anspruch 1 oder 2, worin die Kernteilchen gemischte Metalloxidteilchen sind, die Titan und Zinn enthalten.

4. Verfahren zur Herstellung von Metalloxidteilchen mit Kern-Hülle-Struktur gemäß Anspruch 3, worin die in den Kernteilchen enthaltene Menge an Zinn 1 bis 50 Atom% in Bezug auf die Menge des Titans in den Kernteilchen ist.

5. Verfahren zur Herstellung von Metalloxidteilchen mit Kern-Hülle-Struktur gemäß mindestens einem der Ansprüche 1 bis 4, worin die Kernteilchen gemischte Metalloxidteilchen sind, die Rutiltyp-Titan und Zinn enthalten, und die Hülle ein Zirkoniumoxid ist.

6. Metalloxidteilchen mit Kern-Hülle-Struktur, umfassend:

   Kernteilchen und
   Hüllen, die aus einem Metalloxid aufgebaut sind und auf den Oberflächen der Kernteilchen vorgesehen sind,
   worin die Kernteilchen Metalloxidteilchen mit photokatalytischer Aktivität sind, worin der Brechungsindex der Metalloxidteilchen mit Kern-Hülle-Struktur nicht geringer ist als 2,13, und
   worin die Metalloxidteilchen durch das Verfahren gemäß mindestens einem der Ansprüche 1 bis 5 erhältlich sind.

**Revendications**

1. Procédé de production de particules d'oxyde métallique à structure noyau-enveloppe comprenant :

   la formation d'enveloppes constituées d'un oxyde métallique sur des surfaces de particules de noyau afin de couvrir les particules de noyau tout en exposant les particules de noyau à de la lumière ayant une intensité de 0,1 mW/cm$^2$ ou supérieure, dans lequel les particules de noyau sont des particules d'oxyde métallique présentant une activité photocatalytique.

2. Procédé de production de particules d'oxyde métallique à structure noyau-enveloppe selon la revendication 1, dans lequel la longueur d'onde de la lumière appliquée est de 200 nm à 400 nm.

3. Procédé de production de particules d'oxyde métallique à structure noyau-enveloppe selon la revendication 1 ou 2, dans lequel les particules de noyau sont des particules d'oxyde métallique composites contenant du titane et de l'étain.

4. Procédé de production de particules d'oxyde métallique à structure noyau-enveloppe selon la revendication 3, dans lequel la quantité d'étain contenue dans les particules de noyau est de 1 % atomique à 50 % atomique par rapport à la quantité de titane dans les particules de noyau.

5. Procédé de production de particules d'oxyde métallique à structure noyau-enveloppe selon l'une quelconque des revendications 1 à 4, dans lequel les particules de noyau sont des particules d'oxyde métallique composites contenant du titane de type rutile et de l'étain et l'enveloppe est un oxyde de zirconium.

6. Particules d'oxyde métallique à structure noyau-enveloppe comprenant :

   des particules de noyau, et
   des enveloppes qui sont constituées d'un oxyde métallique et sont fournies sur les surfaces des particules de noyau,
   dans lesquelles les particules de noyau sont des particules d'oxyde métallique présentant une activité photocatalytique, dans lesquelles l'indice de réfraction des particules d'oxyde métallique à structure noyau-enveloppe est d'au moins 2,13, et
   dans lesquelles les particules d'oxyde métallique peuvent être obtenues par le procédé selon l'une quelconque des revendications 1 à 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004018311 A
- JP 2007084374 A
- JP 2000204301 B
- US 6284050 B

**Non-patent literature cited in the description**

- **M. KIYONO.** Sanka Chitan- Busseito Oyogijutsu. Gihhodo shuppan, June 1991, 29-33
- **EL-TONI et al.** discloses core-shell structured metal oxide panicles comprising TiO2 as core particles and silica as a shell compound. *JOURNAL OF COLLOID AND INTERFACE SCIENCE,* vol. 30, 123-130